# EUROPEAN PATENT APPLICATION

(11) **EP 4 672 666 A1**
(43) Date of publication of application: **31.12.2025**
(21) Application number: 23933790.0
(22) Date of filing: 06.11.2023
(51) Int. Cl.: H04L 9/08

(54) **MESSAGE PROCESSING METHOD, APPARATUS, PRODUCT, DEVICE AND MEDIUM**

(30) Priority: 17.04.2023 CN 202310452579
(71) Applicant: Tencent Technology (Shenzhen) Company Limited, Shenzhen, Guangdong, 518057 (CN)
(72) Inventor: CHEN, Zimin, Shenzhen, Guangdong 518057 (CN); GUO, Rui, Shenzhen, Guangdong 518057 (CN); LIANG, Jun, Shenzhen, Guangdong 518057 (CN); SHU, Like, Shenzhen, Guangdong 518057 (CN); LAN, Hu, Shenzhen, Guangdong 518057 (CN); WANG, Zongyou, Shenzhen, Guangdong 518057 (CN); ZHANG, Hui, Shenzhen, Guangdong 518057 (CN); MO, Yang, Shenzhen, Guangdong 518057 (CN); LIU, Hanqing, Shenzhen, Guangdong 518057 (CN)
(74) Representative: EP&C
(86) International application number: PCT/CN2023/129880
(87) International publication number: WO 2024/216923

(57) **Abstract**

Disclosed in the present application are a message processing method, an apparatus, a product, a device and a medium. The method can be applied to a first client, and comprises : acquiring N pieces of sharding information of a client key of a second client, each piece of the sharding information being processed by a corresponding sharding processing device; acquiring a message topic configured at a relay cluster for each sharding processing device, the relay cluster being used for performing an open-source relay service operation between a first client and any sharding processing device that has a relay connection relationship with same; according to the sharding information corresponding to each sharding processing device and the message topic configured for each sharding processing device, generating a configuration message of each sharding processing device; and sending N generated configuration messages to the relay cluster, so as to enable each sharding processing device to acquire a respective configuration message from the relay cluster and process the corresponding sharding information. The present application can improve the reliability and safety for processing private keys of clients.

## Description

### RELATED APPLICATION

This application claims priority to Chinese Patent Application No. 202310452579.4, filed with the China National Intellectual Property Administration on April 17, 2023 and entitled "MESSAGE PROCESSING METHOD, APPARATUS, PRODUCT, DEVICE AND MEDIUM", which is incorporated herein by reference in its entirety.

### FIELD OF THE TECHNOLOGY

This application relates to the field of computer technologies, and in particular, to a message processing method, a message processing apparatus, a computer program product, a computer device, and a computer-readable storage medium.

### BACKGROUND OF THE DISCLOSURE

A client key is very important data of a client, and leakage of the client key may expose service resources in the client to significant risks. The client key of the client is usually stored and managed by the client. Once the client is attacked, the client key of the client is very likely to be obtained maliciously. As a result, the security of the client key cannot be ensured, and further, the security of the service resources in the client cannot be ensured.

### SUMMARY

All embodiments of this application provides a message processing method and apparatus, a product, a device, and a medium, to improve the reliability and security of a client key.

One aspect of this application provides a message processing method. The method is executable by a first client, and the method includes:
obtaining N pieces of shard information of a client key of a second client, N being a positive integer, the N pieces of shard information being configured to generate the client key, each of the N pieces of shard information being processed by a corresponding one of N shard processing devices, the second client being disposed on any one of the N shard processing devices;
obtaining a respective message topic configured by each shard processing device at a relay cluster, the first client and each shard processing device being connected communicatively via the relay cluster, the relay cluster being configured to perform an open-source relay service operation between the first client and each shard processing device;
generating a respective configuration message for each shard processing device according to shard information corresponding to the shard processing device and a message topic configured by the shard processing device; and
transmitting N configuration messages respectively generated for the N shard processing devices to the relay cluster, wherein each shard processing device obtains respective configuration message from the relay cluster, and processes respective shard information based on the obtained configuration message.

Another aspect of this application provides a message processing apparatus. The apparatus is applicable to a first client, and the apparatus includes:
a first obtaining module, configured to obtain N pieces of shard information of a client key of a second client, N being a positive integer, the N pieces of shard information being configured to generate the client key, each of the N pieces of shard information being processed by a corresponding one of N shard processing devices, the second client being disposed on any one of the N shard processing devices;
a second obtaining module, configured to obtain a respective message topic configured by each shard processing device at a relay cluster, the first client and each shard processing device being connected communicatively via the relay cluster, the relay cluster being configured to perform an open-source relay service operation between the first client and each shard processing device;
a generation module, configured to generate a respective configuration message for each shard processing device according to shard information corresponding to the shard processing device and a message topic configured by the shard processing device; and
a transmission module, configured to transmit N configuration messages respectively generated for the N shard processing devices to the relay cluster, wherein each shard processing device obtains respective configuration message from the relay cluster, and processes respective shard information based on the obtained configuration message.

Another aspect of this application provides a computer device. The computer device includes a memory and a processor, the memory having a computer program stored therein, and the computer program, when executed by the processor, causing the processor to perform the method provided in all embodiments.

Another aspect of this application provides a computer-readable storage medium. The computer-readable storage medium has a computer program stored therein, the computer program being adapted to be loaded by a processor to perform the foregoing method.

According to an aspect of this application, a computer program product is provided. The computer program product includes a computer program, and the computer program is stored in a computer-readable storage medium. A processor of a computer device reads and executes the computer program from the computer-readable storage medium, to cause the computer device to perform the foregoing method.

In all embodiments, a first client may obtain N pieces of shard information of a client key of a second client. The N pieces of shard information are configured to generate the client key of the second client; each piece of shard information is processed by one corresponding shard processing device; and the second client is disposed on any shard processing device. Since each piece of shard information is processed by one corresponding shard processing device, distributed processing can be implemented on the client key of the second client at a plurality of shard processing devices, thereby improving the security of the client key. In addition, the first client may further obtain a message topic configured by each shard processing device at a relay cluster, where the first client and each shard processing device are connected communicatively via the relay cluster. Accordingly, the first client can implement communication and interaction with each shard processing device by using the relay connection between the first client and each shard processing device. In addition, the relay cluster is configured to perform a relay service operation (e.g., an open-source relay service operation) between the first client and any shard processing device having the relay connection with the first client. Therefore, the first client can securely distribute each piece of shard information to each shard processing device based on the open-source relay service operation performed by the relay cluster, thereby ensuring the security of distributing the shard information. In addition, the first client may generate a respective configuration message for each shard processing device according to the shard information corresponding to the shard processing device and the message topic configured by each shard processing device; and transmit the generated N configuration messages to the relay cluster, to enable each shard processing device obtains the respective configuration message from the relay cluster and processes the corresponding shard information based on the respective configuration message. The first client generates the configuration message for each shard processing device based on the message topic configured by each shard processing device at the relay cluster, and distributes the configuration message of each shard processing device to each shard processing device by using a relay function of the relay cluster. This enables communication and interaction between the first client and each shard processing device, and enables distribution of the N pieces of shard information, so that distributed processing can be performed on the client key of the second client in the N shard processing devices.

### BRIEF DESCRIPTION OF THE DRAWINGS

FIG. 1 is a schematic structural diagram of a network architecture according to embodiments of this application.
FIG. 2 is a schematic diagram of a message processing scenario according to embodiments of this application.
FIG. 3 is a schematic flowchart of a message processing method according to embodiments of this application.
FIG. 4 is a schematic diagram of a scenario of obtaining shard information according to embodiments of this application.
FIG. 5 is a schematic diagram of a scenario of generating a configuration message according to embodiments of this application.
FIG. 6 is a schematic diagram of another message processing scenario according to embodiments of this application.
FIG. 7 is a schematic flowchart of a multi-client connection method according to embodiments of this application.
FIG. 8 is a schematic flowchart of a service data processing method according to embodiments of this application.
FIG. 9 is a schematic diagram of a service data processing scenario according to embodiments of this application.
FIG. 10 is a schematic structural diagram of a message processing apparatus according to embodiments of this application.
FIG. 11 is a schematic structural diagram of a computer device according to embodiments of this application.

### DESCRIPTION OF EMBODIMENTS

Technical solutions in the embodiments including the embodiments of both the claims and the specification (hereinafter referred to as "all embodiments of this application") of this application will be clearly described below with reference to the accompanying drawings in this application. Apparently, the embodiments described are some embodiments of this application rather than all of the embodiments. All other embodiments obtained by a person of ordinary skill in the art based on the embodiments of this application without creative efforts shall fall within the protection scope of this application.

All embodiments of this application involve a blockchain technology. A blockchain is a new application mode of computer technologies such as distributed data storage, peer-to-peer transmission, consensus mechanisms, and encryption algorithms. The blockchain is essentially a decentralized database, and is a string of data blocks generated through association by using a cryptographic method. Each data block includes information about a batch of network service data (for example, network transactions), the information being configured to verify validity of its information (anti-counterfeiting) and generating a next block. The blockchain may include a blockchain underlying platform, a platform product service layer, and an application service layer.

The blockchain underlying platform may include processing modules such as a user management module, a basic service module, a smart contract module, and an operations management module. The user management module is responsible for managing identity information of all blockchain participants, including maintaining public and private key generation (account management), key management, maintenance of a correspondence between a real identity of a user and a blockchain address (permission management), supervising and auditing of service status of some real identities when authorized, and providing rule configuration for risk control (risk control audit). The basic service module is deployed on all blockchain node devices to verify the validity of a service request, and records a valid request to a storage after completing consensus. For a new service request, a basic service first performs interface adaptation parsing and authentication processing (interface adaptation), then encrypts service information through a consensus algorithm (consensus management), completely and consistently transmits the new service request to a shared ledger (network communication) after encryption, and records and stores the new service request. The smart contract module is responsible for registration and issuance of a contract, as well as contract triggering and contract execution. A developer may define contract logic through a programming language, publish the contract logic to the blockchain (contract registration), according to logic of a contract term, call a key or other events to trigger execution, complete the contract logic, and further provide functions of contract upgrade and cancellation. The operations management module is mainly responsible for deployment, configuration modification, contract setting, and cloud adaptation during product release, and visualized output of a real-time status during product operation, for example: alarm, network status management, and node device health status management.

The platform product service layer provides basic capabilities and an implementation framework of a typical application. Based on these basic capabilities, developers may superpose characteristics of services and complete blockchain implementation of service logic. The application service layer provides a blockchain solution-based application service for use by a service participant.

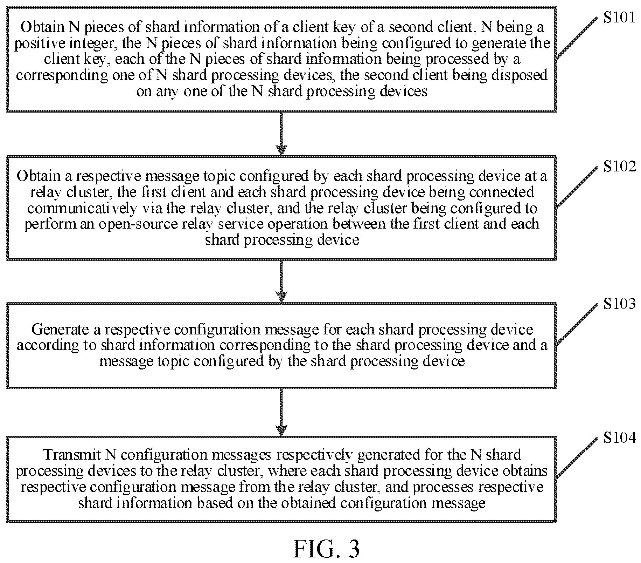

The blockchain technology involved in all embodiments is embodied in: A first client or/and a second client may both connect to a blockchain network, to submit service data in the blockchain network for consensus processing and on-chain processing. For the process, reference may be made to the description in the following embodiments corresponding to FIG. 3.

All embodiments of this application further involves a cloud technology. The cloud technology is a hosting technology that unifies a series of resources such as hardware, software, and networks in a wide area network or a local area network to implement computing, storage, processing, and sharing of data. The cloud technology is a collective name of a network technology, an information technology, an integration technology, a management platform technology, an application technology, and the like based on an application of a cloud computing business mode, and may form a resource pool, which is used as required, and is flexible and convenient. The cloud computing technology becomes an important support. A background service of a technical network system requires a large amount of computing and storage resources, such as a video website, an image website, and more portal websites. Along with the development and application of the Internet industry, each object may have its own identification mark in the future, which needs to be transmitted to a background system for logical processing. Data at different levels is processed separately. Data of various industry needs system support, and can be implemented only by cloud computing.

The cloud technology involved in all embodiments is embodied in: A plurality of relay devices in a relay cluster may perform data interaction through "cloud".

For related data (such as a client key, a communication key, and a message topic configured by each client) involved in all embodiments, when the embodiments of this application are applied to a specific product or technology, collection, use, and processing process of the related data need to comply with national laws and regulations. Prior to data collection, data processing rules need to be communicated, and separate consent and authorization need to be obtained from data owners (such as users, enterprises, or institutions). In addition, the data needs to be processed strictly in accordance with legal requirements and the data processing rules, and technical measures need to be taken to ensure the security of the related data.

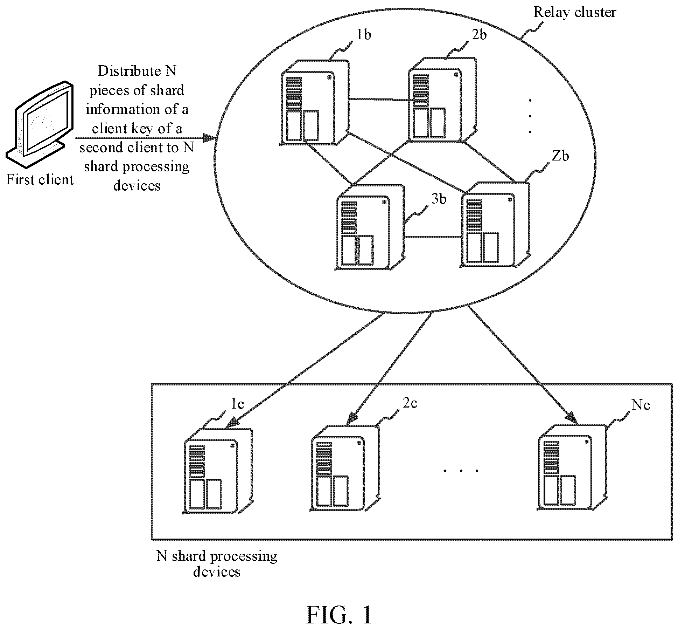

FIG. 1 is a schematic structural diagram of a network architecture according to embodiments of this application. As shown in FIG. 1, the network architecture in all embodiments may include a first client, a relay cluster, and N shard processing devices, N being a positive integer. The relay cluster may be configured with one or more relay devices. In embodiments, as shown in FIG. 1, the relay cluster may include a total of Z relay devices, namely, a relay device 1b to a relay device Zb, Z being a positive integer. The relay device is configured to perform a decentralized service operation to provide a decentralized relay service; and the decentralized relay service refers to the use of distributed relay devices to provide a relay function in network communication, without relying on a single centralized service device. By decentralizing the relay function, the reliability and security of the system can be improved. The N shard processing devices may include a shard processing device 1c to a shard processing device Nc. The N shard processing devices may be configured to process N pieces of shard information of a client key of a second client. In other words, the client key of the second client includes the N pieces of shard information, and the N pieces of shard information and the N pieces of shard processing devices are in a one-to-one correspondence. The one-to-one correspondence means that each piece of shard information is processed by one corresponding shard processing device, and different pieces of shard information are processed by different corresponding shard processing devices. The N pieces of shard information may be configured to generate the client key of the second client. The second client may be disposed on any one of the N shard processing devices. The first client and the second client may be any two clients.

The relay device may be a server. The server may be may be an independent physical server, or may be a server cluster including a plurality of physical servers or a distributed system, or may be a cloud server providing basic cloud computing services such as a cloud service, a cloud database, cloud computing, a cloud function, cloud storage, a network service, cloud communication, a middleware service, a domain name service, a security service, a CDN, big data, and an artificial intelligence platform. A device in which a client is located may be a terminal device, for example, a device in which the first client is located may be a terminal device. For another example, a shard processing device in which the second client is located (to which the second client belongs) may be a terminal device. The terminal device may be: an intelligent terminal such as a smartphone, a tablet computer, a notebook computer, a desktop computer, or a smart television.

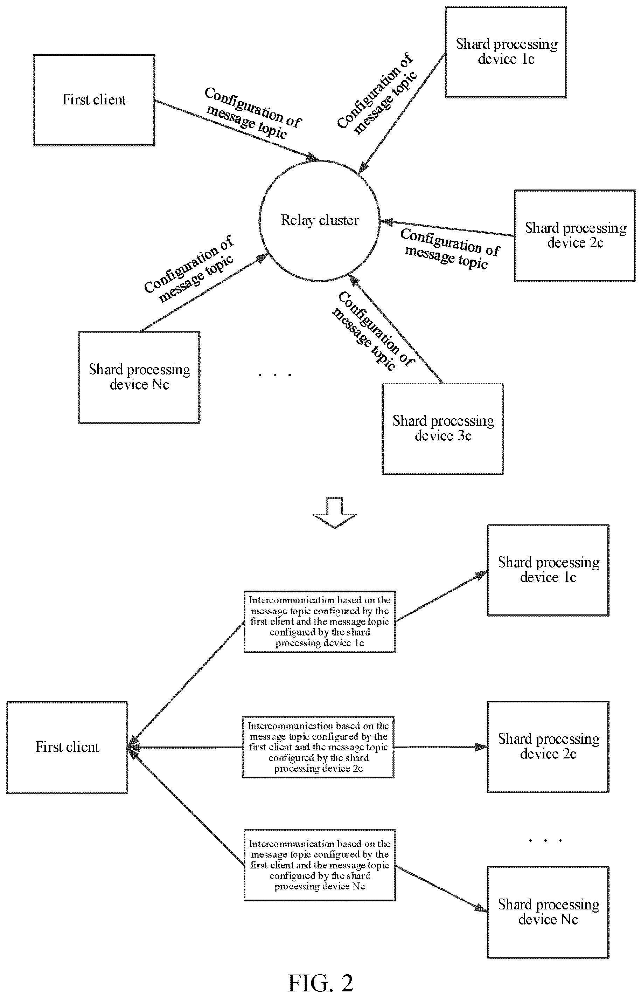

Further, the first client may obtain the N pieces of shard information of the client key of the second client, where the first client and each shard processing device are connected communicatively via the relay cluster. Accordingly, the first client may distribute the N pieces of shard information to the N shard processing devices based on the relay connection by using the relay cluster, so that each shard processing device may obtain and process the respective shard information. For example, if shard information n1 in the N pieces of shard information is processed by the corresponding shard processing device 1c, the first client may distribute the shard information n1 to the shard processing device 1c, so that the shard processing device 1c may process the corresponding shard information n1. For the principle in which the first client distributes all shard information to the shard processing devices by using the relay cluster, reference may be made to the description in the following embodiments corresponding to FIG. 2.

FIG. 2 is a schematic diagram of a message processing scenario according to embodiments of this application. As shown in FIG. 2, both the first client and each shard processing device (including the foregoing N shard processing devices) may separately configure their own message topics at the relay cluster, and any two clients (for example, the first client and any shard processing device) may exchange messages by using the message topics configured by the two clients at the relay cluster. In the application scenarios of decentralized message transmission networks and blockchain networks, the message topic refers to identifications of communication channels or message classifications in a message publication/subscription (Pub/Sub) model. Therefore, in all embodiments of this application, a message topic configured by one device (for example the first client or any shard processing device) is used for the device to recognize and receive a message carrying the message topic transmitted by another device. Configuration of the message topic (that is, configuration of Topic) refers to configuration of a message transfer mode that allows an object (such as the first client or the shard processing device) to configure a topic or a subject, to receive a message related to the configured topic or subject. This message transfer mode can improve the flexibility, scalability, and reliability of message transmission.

The following describes the principle in which the first client distributes the corresponding shard information to the shard processing devices by using the relay cluster. In all embodiments, the first client and the shard processing device 1c may exchange messages by using a message topic configured by the first client and a message topic configured by the shard processing device 1c. For example, it is assumed that the shard information n1 in the N pieces of shard information is processed by the shard processing device 1c. The first client may transmit the shard information n1 corresponding to the shard processing device 1c to the relay cluster by using the message topic configured by the shard processing device 1c. The shard processing device 1c may obtain, from the relay cluster, a configuration message related to the message topic configured by the shard processing device 1c. The configuration message may include the corresponding shard information n1. Accordingly, the shard processing device 1c can obtain the corresponding shard information n1 by using the configuration message obtained from the relay cluster, and process (including store and record) the shard information n1.

Similarly, the first client and the shard processing device 2c may exchange messages by using a message topic configured by the first client and a message topic configured by the shard processing device 2c. For example, it is assumed that the shard information n2 in the N pieces of shard information is processed by the shard processing device 2c. The first client may transmit the shard information n2 corresponding to the shard processing device 2c to the relay cluster by using the message topic configured by the shard processing device 2c. The shard processing device 2c may obtain, from the relay cluster, a configuration message related to the message topic configured by the shard processing device 2c. The configuration message may include the shard information n2. Accordingly, the shard processing device 2c can obtain the corresponding shard information n2 by using the configuration message obtained from the relay cluster, and process (including store and record) the shard information n2. By analogy, for the principle in which the first client distributes the corresponding shard information to other shard processing devices (such as the shard processing devices 3c to Nc) by using the relay cluster, and a process of the first client and the other shard processing devices exchanging messages by using the relay cluster, reference may be made to the foregoing description. Details are not described herein again.

By using the method provided in all embodiments, the first client can securely and reliably distribute all shard information of the client key of the second client to the corresponding shard processing devices by using an open-source (that is, publicly accessible) and decentralized relay cluster, so that distributed processing is performed on the client key of the second client at all the shard processing devices, thereby improving the security and reliability of processing the client key of the second client.

FIG. 3 is a schematic flowchart of a message processing method according to embodiments of this application. An execution body of the embodiments of this application may be a first client. The first client may be located in any message processing device. The message processing device may be a computer device or a computer device cluster including a plurality of computer devices. The computer device may be a server, a terminal device, or another device. This is not limited. As shown in FIG. 3, the method may include operation S101 to operation S104:

Operation S101: Obtain N pieces of shard information of a client key of a second client, N being a positive integer, the N pieces of shard information being configured to generate the client key, each of the N pieces of shard information being processed by a corresponding one of N shard processing devices, the second client being disposed on any one of the N shard processing devices.

The first client and the second client may both be any client. In all embodiments, the first client and the second client may be application clients of a blockchain network. For example, the first client may be a decentralized application (Dapp) client, and the second client may be a resource client of the blockchain network. The resource client is a tool responsible for managing and storing digital resources. A resource management service function implemented by the resource client may include: for example, the digital resource (which may also be referred to as a service resource) may be transferred to another account based on the resource client, or the digital resource transferred by another account may be received based on the resource client. The resource client may be a hardware device or a software program. The resource client may be configured to implement the resource management service function, and implement a communication connection to the decentralized application client based on the resource management service function. In all embodiments of this application, the resource client (the second client) may establish the communication connection to the decentralized application client (the first client), to initiate resource transfer service data of the resource client (the second client) by using the decentralized application client (the first client) instead, and submit the resource transfer service data to the resource client (the second client) for performing related operations such as signing.

The first client may obtain the client key of the second client, and the client key may be a private key of the second client. In all embodiments, the client key obtained by the first client may be inputted into the first client by a user (which may be referred to as a key holder) to which the second client belongs, or may be directly requested to be generated in the first client by the user to which the second client belongs.

In all embodiments, the first client may be in a secure environment. For the security and privacy of the client key of the second client, the first client may process related data of the client key in the secure environment. The secure environment may be an environment isolated from another environment (that is, any environment other than the secure environment) in the first client, and data in the secure environment is confidential and invisible data. In all embodiments, the secure environment may be a trusted execution environment (TEE), a hardware secure environment, or the like. Therefore, the first client may obtain the client key of the second client in the secure environment of the first client, and may obtain the N pieces of shard information of the client key in the secure environment, where N is a positive integer, and a specific value of N may be determined according to an actual application scenario. The value of N is not limited by all embodiments in this application. The N pieces of shard information may be configured to generate the client key of the second client.

A method of obtaining the N pieces of shard information of the client key may be determined according to an actual application scenario. The following describes a process of the first client obtaining the N pieces of shard information of the client key of the second client by using an example. The process may be performed by the first client in the secure environment of the first client. Descriptions of content in (1) to (3) are as follows:
(1) The first client may generate an M-1 degree polynomial in the secure environment based on the client key of the second client. The polynomial is usually an algebraic expression including constant terms, linear terms, quadratic terms, and the like, arranged in descending order of degrees. The M-1 degree polynomial means that the highest degree of the polynomial is M-1, where M is a positive integer less than N. For example, the client key of the second client may be represented as a₀ and the M-1 degree polynomial may be represented as y. Accordingly, the M-1 degree polynomial may be: y = a₀ + a₁ · x + a₂ · x²+...... +a_{M-1} · x^{M-1}, where the highest degree of the polynomial is M-1, that is, an exponent of the highest degree is M-1; x is a variable, and a₀ ~ a_{M-1} may be coefficients (may be constants); and a₁ ~ a_{M-1} may be any set constant, and _{X}^{M-1} represents x to the power of M-1.
(2) The first client may obtain the N pieces of shard information of the client key of the second client in the secure environment based on the M-1 degree polynomial. The process is specifically as follows: The first client may generate a curve in the secure environment based on the M-1 degree polynomial. The curve is a curve representing the M-1 degree polynomial. y may represent a vertical axis of the curve, and x may represent a horizontal axis of the curve. Both x and y are variables, with y changing as x changes. A vertical coordinate of a point on the curve may be obtained on the vertical axis, and a horizontal coordinate of a point on the curve may be obtained on the horizontal axis. The first client may obtain (randomly or arbitrarily) coordinate information of N points on the curve. Coordinate information of any point includes a value of a horizontal coordinate of the point on the curve on the horizontal axis x and a value of a vertical coordinate of the point on the vertical axis y. The first client may directly use the coordinate information of the N points as the N pieces of shard information of the client key of the second client, where coordinate information of one point is one piece of shard information.
   Any point on the curve may be a solution of the M-1 degree polynomial. According to the Lagrange's interpolation theorem, the M-1 degree polynomial may be solved by using M solutions (that is, M points). That is, the M-1 degree polynomial may be solved by using the M points of the M-1 degree polynomial, that is, all coefficients (for example, the coefficients a₀ ~ a_{M-1} included in the foregoing example) in the M-1 degree polynomial are solved. Since a₀ in the M-1 degree polynomial represents the client key of the second client, the client key of the second client is solved if a₀ is solved. The Lagrange's interpolation theorem is a method for constructing a polynomial interpolation function. According to the Lagrange's interpolation theorem, an interpolation polynomial satisfying these points may be constructed. The interpolation polynomial may be configured to perform interpolation calculations between the given points, to estimate values of missing points. Therefore, the client key of the second client may be generated based on M pieces of shard information in the N pieces of shard information. Through the foregoing process, the first client obtains the N pieces of shard information of the client key of the second client.

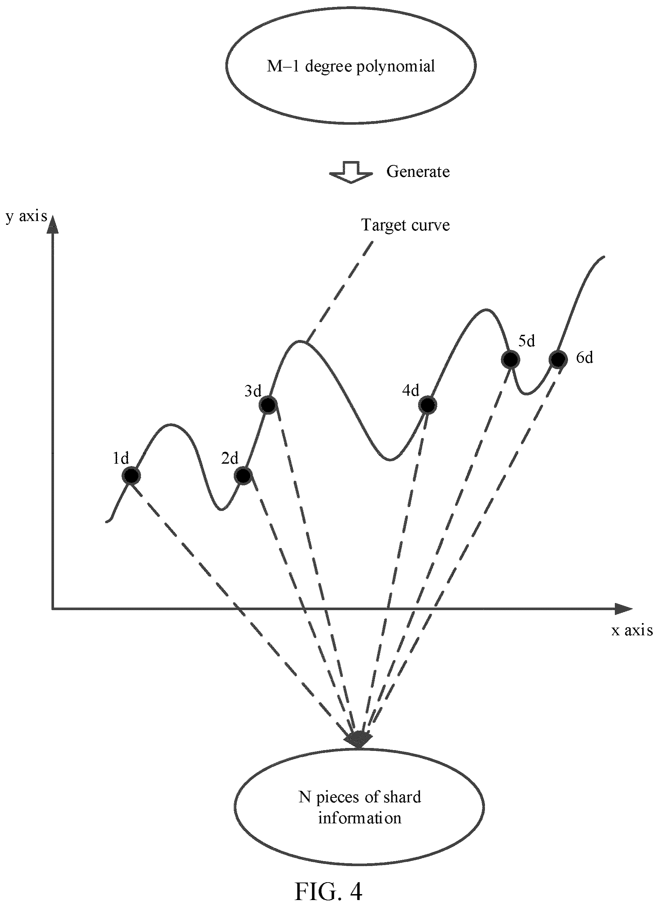

(3) FIG. 4 is a schematic diagram of a scenario of obtaining shard information according to embodiments of this application. As shown in FIG. 4, the first client may generate the curve by using the M-1 degree polynomial. The curve is a curve formed by representing the M-1 degree polynomial.

The first client may obtain the coordinate information of the N points (for example, N may be 6, and the N points include a total of 6 points, namely, a point 1d to a point 6d obtained herein) on the curve as the N pieces of shard information. In other words, coordinate information of one point is one piece of shard information. Further, the N pieces of shard information and the N pieces of shard processing devices are in a one-to-one correspondence. The one-to-one correspondence means that the N pieces of shard information are allocated to N shard processing devices each processing one of the N pieces of shard information, and different pieces of shard information are processed by different corresponding shard processing devices. The N shard processing devices may be any configured N devices that are configured to perform distributed processing on the client key of the second client. In all embodiments, a correspondence between shard information and a shard processing device may be randomly determined. For example, through random determining, the shard information n1 in the N pieces of shard information may correspond to the shard processing device 1c, the shard information n2 may correspond to the shard processing device 2c, and so on. This is not limited by all embodiments in this application. The second client may be disposed on any one of the N shard processing devices. In other words, the second client may be configured to process one piece of shard information of the client key of the second client. For example, the second client may be disposed on the shard processing device 1c. The shard processing device 1c is a shard processing device to which the second client belongs. The second client may process shard information (for example, the shard information n1) corresponding to the shard processing device 1c. All other shard processing devices in the N shard processing devices than the shard processing device to which the second client belongs may be additionally configured service devices (such as servers).

Operation S102: Obtain a respective message topic configured by each shard processing device at a relay cluster, the first client and each shard processing device being connected communicatively via the relay cluster, and the relay cluster being configured to perform an open-source relay service operation between the first client and each shard processing device.

In all embodiments, any object (for example, the first client, the second client, and each shard processing device) may configure (may be understood as register) a message topic of the object at the relay cluster. The message topic has a topic identifier (Topic ID). Any object may transmit a message to another object through the relay cluster based on a message topic configured by another object. The message topic configured by the second client is a message topic configured by the shard processing device in which the second client is located (to which the second client belongs).The message topics configured by a plurality of shard processing devices are different.

In all embodiments, the first client (that is, the Dapp) may actively initiate a relay connection with each another object (including each shard processing device), to establish a relay connection with each another object. In all embodiments, the second client (that is, the resource client) may not have a function of actively initiating a relay connection with another object. In this case, the shard information of the client key of the second client can be distributed to the shard processing devices by using the first client by using the function of t actively initiating a relay connection with another object (for example, the shard processing device).

The first client may actively provide a message topic configured by the first client to each shard processing device. For the sake of security, the first client may provide the message topic configured by the first client to each shard processing device in an offline manner. Offline refers to activities or interactions that take place in the real world, as opposed to online, which refers to activities or interactions that take place on a network (the Internet). For example, the first client may generate a QR code (which may be referred to as a digital code). The QR code may be encapsulated with the message topic configured by the first client and an address of the relay cluster. Each shard processing device may scan the QR code, to obtain the message topic configured by the first client and the address of the relay cluster. In all embodiments, the relay cluster may include a plurality of relay devices, the relay device may be a server, and the address of the relay cluster may be a server address of any relay device. Each shard processing device may configure the respective message topic at the relay cluster by using the obtained address of the relay cluster. Alternatively, each shard processing device may further transmit the message topic configured by the shard processing device to the first client. For example, each shard processing device may alternatively transmit the message topic offline to the first client by using the QR code. The first client may save (that is, record) the message topic configured by each shard processing device. Through the foregoing process, the first client establishes the relay connection with each shard processing device. The relay connection established between the first client and any shard processing device is established (that is, determined) by using the message topic configured by the first client and the message topic configured by any shard processing device. The message topic configured by the first client and the message topic configured by any shard processing device jointly form a session (session control) between the first client and the shard processing device. In other words, the first client and any shard processing device perform a session (or communication) by using the relay connection established between the first client and the shard processing device.

In addition, the first client may obtain the message topic configured by each shard processing device at the relay cluster. The relay cluster in all embodiments may be configured to perform the relay service operation (for example an open-source relay service operation) between the first client and any shard processing device communicatively connected with the first client, to provide an open-source relay service. For example, if the first client and the shard processing device 1c are connected communicatively via the relay cluster, the relay cluster may perform the open-source relay service operation between the first client and the shard processing device 1c, to provide the open-source relay service. For another example, if the first client and the shard processing device 2c are connected communicatively via the relay cluster, the relay cluster may perform the open-source relay service operation between the first client and the shard processing device 2c, to provide the open-source relay service. The open-source relay service may mean that an operation performed by an object by using the relay cluster may be both public and open-source.

The relay cluster may be configured with a plurality of relay devices, the plurality of relay devices may be exclusive to an institution or an enterprise, and the plurality of relay devices may be any configured device. The relay service provided by the relay cluster may be a decentralized service provided by the plurality of relay devices. The relay cluster only needs to maintain the message topic configured by each object (for example, the first client, the second client, or the shard processing device), and does not need to know actual identity information of each object. In other words, the relay cluster does not pay attention to who an object performing a session is, and does not pay attention to specific content of a transferred message. Therefore, a process in which the objects exchange messages by using the relay connection established at the relay service is secure and private.

In all embodiments, by using the open-source decentralized relay service, any custom type of message can be exchanged between the objects having the relay connection. In other words, a type of the message exchanged is not limited, and any custom type of message can be exchanged, enabling flexible interactions and broad adaptability. In addition, objects (for example, the first client and the plurality of shard processing devices) that exchange messages by using the open-source relay service may be different types of clients, such as a browser client, a software client, a PC client (for example, a computer client), and a mobile client (for example, a mobile phone client). In other words, types of objects that exchange messages are also not limited. In all embodiments, connection and interaction between a plurality of types of objects may be implemented by using the open-source relay service.

In all embodiments, the relay cluster may be maintained based on a resource connection protocol (WalletConnect, an open-source protocol) (that is, the relay service may be provided by the resource connection protocol), or the relay cluster may be a self-built open-source cluster. This is not limited by all embodiments in this application.

Operation S103: Generate a respective configuration message for each shard processing device according to shard information corresponding to the shard processing device and a message topic configured by the shard processing device.

The first client may generate the respective configuration message of each shard processing device by using the shard information corresponding to each shard processing device and the message topic configured by each shard processing device. The configuration message of each shard processing device is a configuration message in which the message topic configured by each shard processing device is set, that is, a message related to the message topic configured by each shard processing device. For example, a configuration message of the shard processing device 1c is a message configured based on a message topic configured by the shard processing device 1c, that is, a message related to the message topic configured by the shard processing device 1c.

In an implementation, a communication key may be shared between the first client and each shard processing device. For example, the communication key shared between the first client and any shard processing device may be a symmetric key. The symmetric key refers to the first client and the shard processing device using the same key to encrypt and decrypt messages exchanged between them. The communication key is configured to encrypt messages exchanged between the first client and the shard processing device, to ensure the security of interaction. For example, one communication key may be shared between the first client and the shard processing device 1c, and the communication key is configured to encrypt messages exchanged between the first client and the shard processing device 1c. For another example, one communication key may be shared between the first client and the shard processing device 2c, and the communication key is configured to encrypt messages exchanged between the first client and the shard processing device 2c. Communication keys between the first client and different shard processing devices may be the same or may be different. This is not limited by all embodiments in this application.

Any one of the N shard processing devices may be referred to as a target shard processing device. Since principles of generating the configuration messages of the shard processing devices are the same, an example of generating a configuration message of a target shard processing device is used for specific description below.

The first client may set, for the shard information corresponding to the target shard processing device, the message topic configured by the target shard processing device, to generate an initial configuration message of the target shard processing device. The initial configuration message refers to shard information in which the message topic configured by the target shard processing device is set. For example, the first client adds a topic identifier (denoted as a Topic ID) of the message topic configured by the target shard processing device to shard information ni corresponding to the target shard processing device, to form the initial configuration message of the target shard processing device. The initial configuration message refers to the shard information ni with the Topic ID.

The first client may encrypt the initial configuration message of the target shard processing device by using the communication key shared between the first client and the target shard processing device, to obtain the configuration message of the target shard processing device. The configuration message of the target shard processing device may be understood as a message (a message obtained by using a configured message topic or a message related to the configured message topic) configured at the relay cluster by the target shard processing device.

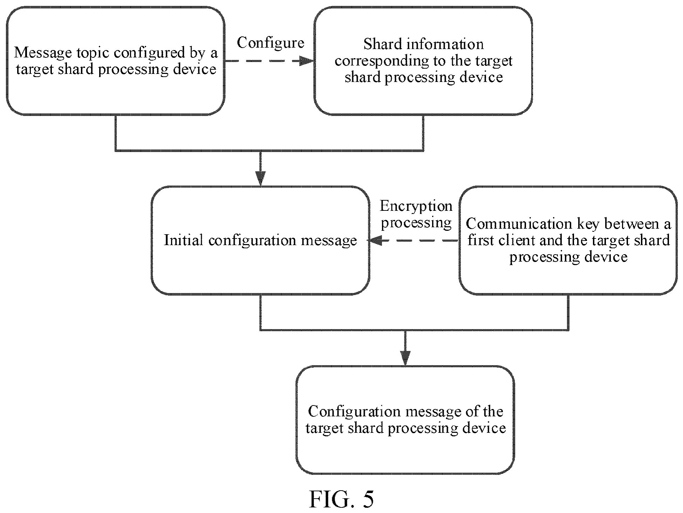

FIG. 5 is a schematic diagram of a scenario of generating a configuration message according to embodiments of this application. As shown in FIG. 5, the first client may configure the shard information corresponding to the target shard processing device by using the message topic configured by the target shard processing device. For example, the first client sets the shard information corresponding to the target shard processing device with the topic identifier of the message topic configured by the target shard processing device, to obtain the initial configuration message of the target shard processing device. The first client may encrypt the initial configuration message by using the communication key shared between the first client and the target shard processing device, to obtain the configuration message of the target shard processing device.

Operation S104: Transmit N configuration messages respectively generated for the N shard processing devices to the relay cluster, where each shard processing device obtains respective configuration message from the relay cluster, and processes respective shard information based on the obtained configuration message.

The first client may transmit the generated N configuration messages to the relay cluster. In an implementation, the first client may transmit the N configuration messages to any relay device (for example, a relay device closest to the first client) in the relay cluster. After receiving the N configuration messages, the relay device may broadcast (that is, transmit) the N configuration messages to other relay devices in the relay cluster, so that each relay device may maintain the same and complete message.

Alternatively, in another implementation, to reduce the pressure of a single relay device broadcasting a configuration message, the first client may further transmit the N configuration messages to a plurality of relay devices. In an implementation of this implementation, if a quantity of relay devices in the relay cluster is Z, where Z is a positive integer less than N, the first client may divide the N configuration messages into Z groups (randomly and uniformly), which may be referred to as Z configuration message groups, and one configuration message group includes at least one configuration message. The first client may separately transmit the Z configuration message groups to the Z relay devices in the relay cluster, one relay device may receive one configuration message group, and the relay devices may broadcast the received respective configuration message groups to each other. Finally, each relay device may obtain the N configuration messages. In another implementation of this implementation, if Z is greater than N, the first client may not group the N configuration messages, and the first client may separately transmit the N configuration messages to the N relay devices in the relay cluster. One relay device may receive one configuration message. The relay devices may also broadcast the received respective configuration messages to each other, so that each relay device may obtain the N configuration messages.

After the relay cluster obtains the N configuration messages, each shard processing device may obtain the respective configuration message from the relay cluster, and may process the corresponding shard information based on the obtained respective configuration message. An example in which the target shard processing device obtains the shard information is used for description:

After receiving the configuration message of the target shard processing device, the relay cluster may actively push the configuration message to the target shard processing device (for example, push the configuration message by using any relay device, for example, push the configuration message by using the relay device closest to the target shard processing device). Alternatively, the target shard processing device may actively pull (for example, pull the configuration message from any relay device, for example, pull the configuration message from the relay device closest to the target shard processing device) the configuration message of the target shard processing device from the relay cluster.

After obtaining the configuration message of the target shard processing device, the target shard processing device may decrypt the obtained configuration message by using the communication key shared between the target shard processing device and the first client, to obtain the corresponding shard information. The target shard processing device may process, for example store, the shard information.

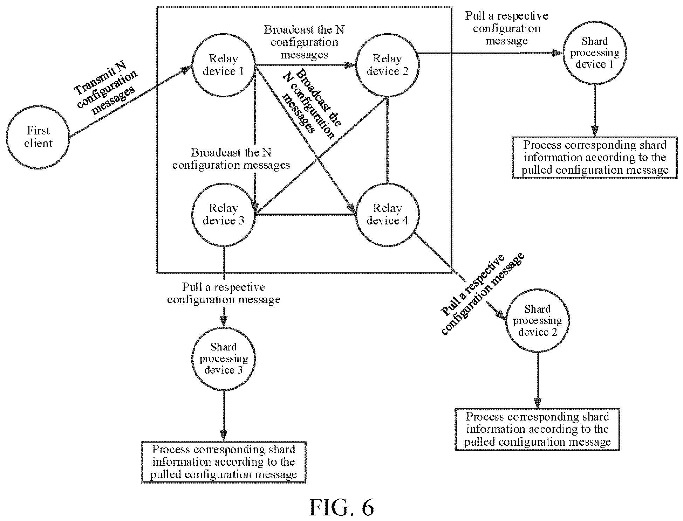

FIG. 6 is a schematic diagram of another message processing scenario according to embodiments of this application. As shown in FIG. 6, it is assumed that the N shard processing devices include a shard processing device 1 to a shard processing device 3, and the relay devices in the relay cluster include a relay device 1 to a relay device 4.

The first client may transmit the N configuration messages to the relay device 1 in the relay cluster that is closest to the first client, and the relay device 1 may broadcast the N configuration messages to the relay device 2, the relay device 3, and the relay device 4, so that the relay device 2, the relay device 3, and the relay device 4 may also obtain and store the N configuration messages.

The shard processing device 1 may obtain, from the relay device 2 in the relay cluster that is closest to the shard processing device 1, a configuration message of the shard processing device 1 transmitted by the first client. The shard processing device 1 may process corresponding shard information by using the configuration message.

Similarly, the shard processing device 2 may obtain, from the relay device 4 in the relay cluster that is closest to the shard processing device 2, a configuration message of the shard processing device 2 transmitted by the first client. The shard processing device 2 may process corresponding shard information by using the configuration message.

Similarly, the shard processing device 3 may obtain, from the relay device 3 in the relay cluster that is closest to the shard processing device 3, a configuration message of the shard processing device 3 transmitted by the first client. The shard processing device 3 may process corresponding shard information by using the configuration message.

In an implementation, before requesting the relay cluster to configure the message topic of the first client, the first client may further transmit a persistent connection establishment request to the relay cluster (for example, to any relay device). The relay cluster may establish a persistent connection to the first client based on the persistent connection establishment request. If the persistent connection is disconnected, then it may be reconnected at any time. When receiving a new message related to the message topic configured by the first client (which may also be referred to as the configuration message of the first client), the relay cluster may transmit new message prompt information to the first client based on the persistent connection established between the first client and the relay cluster, to prompt the first client that the new message exists. After obtaining the new message prompt information, the first client may pull the new message related to the message topic configured by the first client to the relay cluster (for example, to any relay device such as the relay device closest to the first client).

In all embodiments, when the first client transmits a message (for example, the configuration message of the shard processing device) to the relay cluster after establishing the persistent connection to the relay cluster, the first client may alternatively transmit the message to the relay cluster based on the persistent connection established between the relay cluster and the first client. After obtaining the address of the relay cluster by using the first client, each shard processing device may also establish a persistent connection to the relay cluster according to the same principle described above. Each shard processing device may also exchange messages with the relay cluster by using the persistent connection established to the relay cluster, for example, process and obtain the configuration message of the shard processing device from the relay cluster.

In all embodiments, since the client key of the second client may be generated by using the M pieces of shard information in the N pieces of shard information, if at least M pieces of shard processing devices in the N pieces of shard processing devices operate normally (that is, a small quantity of shard processing devices may be faulty and unable to operate normally), the client key of the second client may be generated, thereby improving the fault tolerance for recovering the client key of the second client. In addition, since distributed storage and processing are performed on the client key of the second client at the N shard processing devices by using the N pieces of shard information, malicious devices (for example, fewer than M shard processing devices) that obtain less than M pieces of shard information cannot generate the client key of the second client, thereby improving the security and privacy of processing the client key.

In all embodiments, a first client may obtain N pieces of shard information of a client key of a second client, where the N pieces of shard information are configured to generate the client key of the second client; each piece of shard information is processed by one corresponding shard processing device; and the second client is disposed on any shard processing device. Since one piece of shard information is processed by one corresponding shard processing device, distributed processing can be implemented on the client key of the second client at a plurality of shard processing devices, thereby improving the security of the client key. In addition, the first client may further obtain a message topic configured by each shard processing device at a relay cluster, where a relay connection is configured between the first client and each shard processing device. Accordingly, the first client can implement communication and interaction with each shard processing device by using the relay connection between the first client and each shard processing device. In addition, the relay cluster is configured to perform an open-source relay service operation between the first client and any shard processing device having the relay connection with the first client. Therefore, the first client can securely distribute each piece of shard information to each shard processing device based on the open-source relay service operation performed by the relay cluster, thereby ensuring the security of distributing the shard information. In addition, the first client may generate a configuration message of each shard processing device according to the shard information corresponding to each shard processing device and the message topic configured by each shard processing device; and transmit the N configuration messages respectively generated for the plurality of shard processing devices to the relay cluster, to enable each shard processing device to obtain the respective configuration message from the relay cluster based on respectively configured message topic and process (e.g., stores) respective shard information based on the obtained configuration message, for being obtained by the second client to generate the client key. The first client generates the configuration message of each shard processing device based on the message topic configured by each shard processing device at the relay cluster, and distributes the configuration message of each shard processing device to each shard processing device by using a relay function of the relay cluster. This enables communication and interaction between the first client and each shard processing device, and enables distribution of the N pieces of shard information, so that distributed processing of the client key of the second client can be performed in the N shard processing devices.

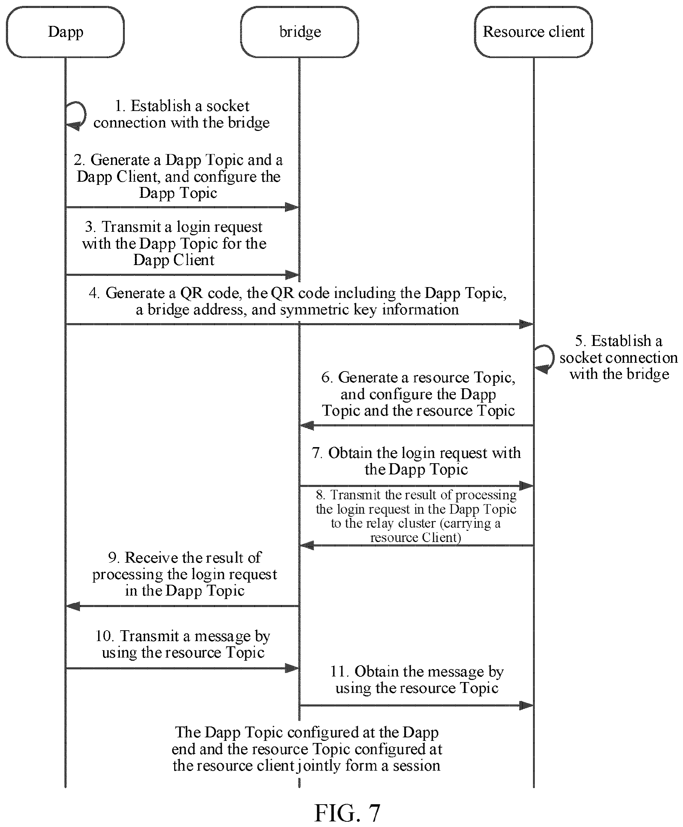

FIG. 7 is a schematic flowchart of a multi-client connection method according to embodiments of this application. As shown in FIG. 7, Dapp may be the first client, a resource client may be the second client, and bridge may be the relay cluster (which may also be understood as a relay service provided by the relay cluster). The method may include the following steps.
1. The Dapp may establish a socket connection with the bridge.
2. The Dapp may automatically generate a Dapp Topic and a Dapp Client. The Dapp Topic may be a topic identifier of a message topic that the Dapp needs to subsequently configure at the relay service, and the Dapp Client is an identifier (an identifier of a client, which may be referred to as a client identifier of the first client) of the Dapp at the relay service, so that the bridge subsequently only needs to identify the Dapp by using the Dapp Client, without paying attention to actual identity information of the Dapp. The Dapp may configure the Dapp Topic at the relay cluster.
3. The Dapp may transmit a login request with the Dapp Topic for the Dapp Client to the bridge, to request to log in to the resource client in the Dapp.
4. The Dapp may generate a QR code, and the QR code may include the Dapp Topic, a bridge address (for example, a server address), and symmetric key information (that is, a communication key shared between the Dapp and the resource client). The Dapp may provide the QR code to the resource client for code scanning in an offline manner (a manner without a network connection), so that the resource client may obtain the Dapp Topic, the bridge address, and the symmetric key information.
5. After obtaining the Dapp Topic, the bridge address, and the symmetric key information, the resource client may also establish a socket connection (persistent connection) with the bridge.
6. The resource client may alternatively automatically generate a resource Topic (that is, a topic identifier of a message topic to be configured by the resource client at the relay cluster) and a resource client (that is, an identifier of the resource client at the relay cluster and may be referred to as a client identifier of the resource client), and the resource client may configure both the Dapp Topic and the resource Topic at the relay cluster.
7. The resource client may obtain a login request with the Dapp Topic from the relay cluster, the login request may be encrypted by using the symmetric key information, and the login request may carry identity information of the Dapp. The resource client may process the login request, for example, perform verification on the identity information of the Dapp in the login request, or pop up a pop-up window for a user to determine whether to authorize the Dapp to log in to the resource client, to obtain a processing result for the login request. The processing result may be agreeing to authorize the Dapp to log in to the resource client or disagreeing to authorize the Dapp to log in to the resource client.
8. The resource client may transmit the result of processing the login request in the Dapp Topic to the relay cluster. The processing result may carry the resource Client, and the processing result may be encrypted by using the symmetric key information between the resource client and the Dapp.
9. The Dapp may obtain, from the relay cluster, a result of processing the login request by the resource client in the Dapp Topic configured by the Dapp. If the processing result is a result of agreeing to authorize the Dapp to log in to the resource client, the Dapp may successfully log in to the resource client.
10. The Dapp may transmit a message to the resource client by using the relay cluster by using the resource Topic configured by the resource client.
11. The resource client may obtain, at the relay cluster by using the resource Topic configured by the resource client, the message transferred by the Dapp.

Similarly, the resource client may also use the Dapp Topic configured by the Dapp to transfer the message to the Dapp by using the relay cluster, and the Dapp may obtain, at the relay cluster by using the resource Topic configured by the resource client, the message transferred by the resource client. Accordingly, a connection (for example, the relay connection) between the Dapp and the resource client is implemented by using the Dapp Topic configured by the Dapp and the resource Topic configured by the resource client. In other words, the Dapp Topic configured by the Dapp and the resource Topic configured by the resource client jointly form a session between the Dapp and the resource client. Subsequently, reliable and secure interaction between the Dapp and the resource client may be implemented by using the relay connection between the Dapp and the resource client at the decentralized relay cluster.

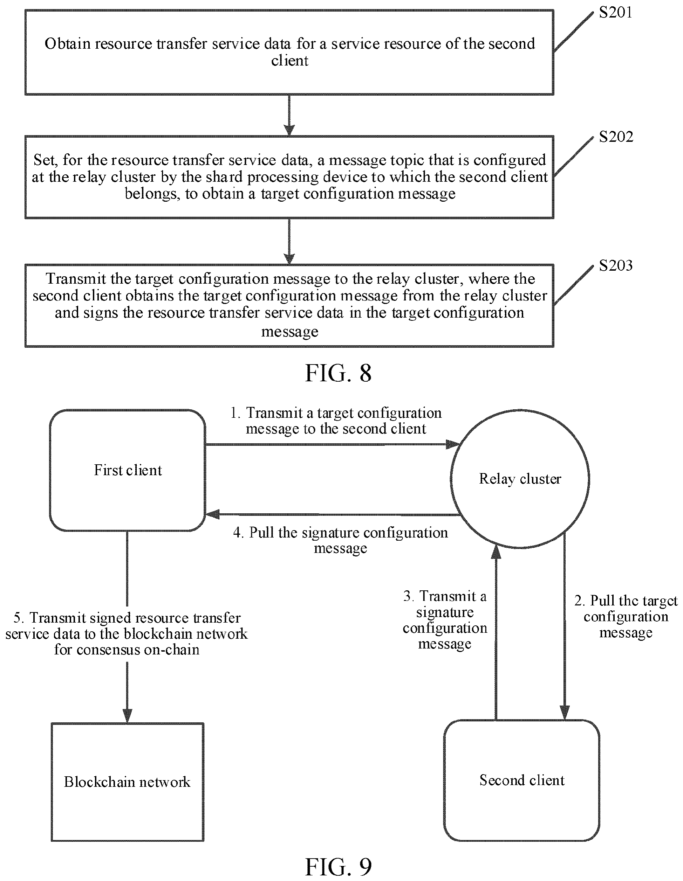

FIG. 8 is a schematic flowchart of a service data processing method according to embodiments of this application. An execution body of the embodiments of this application may alternatively be the first client. As shown in FIG. 8, the method may include the following steps.

Operation S201: Obtain resource transfer service data for a service resource of the second client, where the resource transfer service data is configured for instructing to perform transfer processing on the service resource.

The second client may perform a login operation the first client, the user may initiate the resource transfer service data of the second client in the first client, and the first client may transmit the resource transfer service data to the second client for signature. The second client is a resource client, and the second client may have a service resource (which may be digital resource). The first client may obtain (for example, generate) the resource transfer service data for the service resource. The resource transfer service data may be service data for instructing to perform transfer processing on the service resource. For example, the second client may belong to a user 1, and the service resource of the second client also belongs to the user 1. Therefore, the resource transfer service data may be service data for transferring the service resource to another user (for example, a user 2).

Operation S202: Set, for the resource transfer service data, a message topic that is configured at the relay cluster by the shard processing device to which the second client belongs, to obtain a target configuration message.

The first client may set, for the resource transfer service data, the message topic configured by the second client at the relay cluster, to obtain the target configuration message of the second client. The target configuration message is the resource transfer service data in which the message topic configured by the second client is set.

Operation S203: Transmit the target configuration message to the relay cluster, where the second client obtains the target configuration message from the relay cluster and signs the resource transfer service data in the target configuration message.

The first client may transmit the target configuration message to the relay cluster (in the same manner as transmitting the configuration message of the shard processing device), so that the second client may obtain, at the relay cluster, the target configuration message transmitted by the first client. The target configuration message may alternatively be a message obtained after the first client performs encryption processing by using the communication key shared between the first client and the second client.

The second client may decrypt the target configuration message obtained from the relay cluster, to obtain the resource transfer service data. The second client may sign the resource transfer service data, to obtain signed resource transfer service data. In all embodiments, after obtaining the resource transfer service data through decryption, the second client may output query information. The query information is configured to query whether to sign the resource transfer service data. When the second client receives a confirmation operation of a user (for example, an owner of the second client) on the query information, the second client may sign the resource transfer service data, to obtain the signed resource transfer service data.

The client key of the second client is generated by using the M pieces of shard information, and the second client corresponds to one piece of shard information (the shard information corresponding to the shard processing device to which the second client belongs). Therefore, the second client may separately request to obtain the shard information of the client key from any M-1 of shard processing devices other than the shard processing device to which the second client belongs among the N shard processing devices, that is, may obtain the M-1 pieces of shard information from the M-1 pieces of shard processing devices. The second client can obtain the M pieces of shard information, namely, the M-1 pieces of shard information and the one piece of shard information corresponding to the second client.

In all embodiments, the shard processing device to which the second client belongs may also be in a secure environment. To ensure the security and privacy of the client key of the second client, the second client may obtain the M-1 shard information from the M-1 shard processing devices by using the secure environment of the shard processing device to which the second client belongs. The second client may alternatively generate, in the secure environment, the client key (for example, the client private key) of the second client by using the obtained M pieces of shard information. The second client may sign (for example, encrypt) the resource transfer service data by using the generated client key, to obtain the signed resource transfer service data.

The second client may set, for the signed resource transfer service data, the message topic configured at the relay cluster by the first client (for example, add a topic identifier of the message topic configured at the relay cluster by the first client), to obtain the initial configuration service data, and may encrypt the initial configuration service data by using the communication key shared between the second client and the first client, to obtain a signature configuration message (that is, the encrypted and signed resource transfer service data).

The second client may transmit the signature configuration message to the relay cluster, and the first client may obtain, from the relay cluster, the signature configuration message returned by the second client. The first client may decrypt the signature configuration message, to obtain the signed resource transfer service data. The first client may transmit the signed resource transfer service data to the blockchain network (which may have a consensus network), so that the blockchain network may perform consensus processing on the signed resource transfer service data by using the consensus network (for example, perform a signature verification consensus by using a client public key of the second client), and after successful consensus on the signed resource transfer service data, may perform transfer processing on the service resource as instructed by the resource transfer service data. For example, the service resource belonging to the user 1 is transferred to an account of the user 2. In addition, the resource transfer service data may be processed on-chain, that is, stored in the blockchain network.

FIG. 9 is a schematic diagram of a service data processing scenario according to embodiments of this application. As shown in FIG. 9:
1. The first client may transmit the target configuration message of the second client to the relay cluster. The target configuration message is encrypted resource transfer service data in which the message topic configured by the second client is set.
2. The second client may obtain, at the relay cluster, the target configuration message related to the message topic configured by the second client.
3. The second client may decrypt the target configuration message, to obtain the resource transfer service data, and shard information processed by other M-1 shard processing devices may be used to sign the resource transfer service data, to obtain the signed resource transfer service data.
   The second client may further set, for the signed resource transfer service data, the message topic configured by the first client, encrypt the set message, to obtain the signature configuration message, and transmit the signature configuration message to the relay cluster.
4. The first client may pull, from the relay cluster, the signature configuration message transmitted by the second client, and may decrypt the signature configuration message, to obtain the signed resource transfer service data.
5. The first client may transmit the signed resource transfer service data to the blockchain network for consensus on-chain, to complete execution of the resource transfer service data in the blockchain network.

According to the method provided in all embodiments, a connection between any two independent devices (for example, a device in which the first client is located and a device in which the second client is located) may be established by using the open-source decentralized relay cluster, to implement convenient and secure interaction between the two independent devices. Applying the method to a blockchain scenario may further initiate service data (for example, the resource transfer service data) of the second client in the first client, and implement convenient and secure consensus on-chain on the service data through relay cluster-based communication between the first client and the second client.

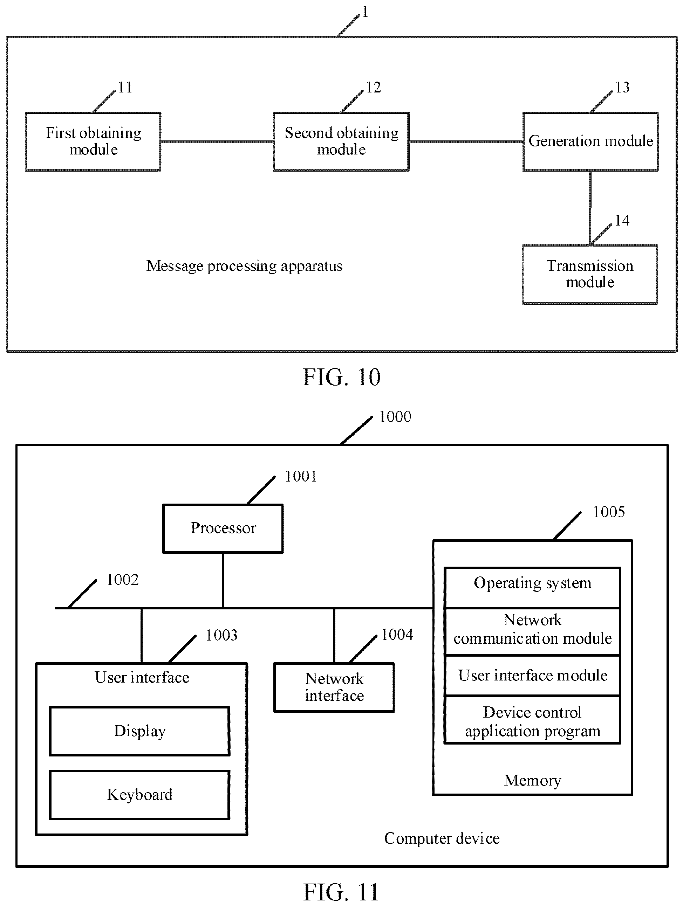

FIG. 10 is a schematic structural diagram of a message processing apparatus according to embodiments of this application. The message processing apparatus may be a computer program (including program code) running in a computer device. For example, the message processing apparatus is application software, and the message processing apparatus may be configured to perform the corresponding operations in the method provided in the embodiments of this application. As shown in FIG. 10, a message processing apparatus 1 may include: a first obtaining module 11, a second obtaining module 12, a generation module 13, and a transmission module 14.

The first obtaining module 11 is configured to obtain N pieces of shard information of a client key of a second client, N being a positive integer, the N pieces of shard information being configured to generate the client key, each of the N pieces of shard information being processed by a corresponding one of N shard processing devices, the second client being disposed on any one of the N shard processing devices;.
The second obtaining module 12 is configured to obtain a respective message topic configured by each shard processing device at a relay cluster, the first client and each shard processing device being connected communicatively via the relay cluster, the relay cluster being configured to perform an open-source relay service operation between the first client and each shard processing device.

The generation module 13 is configured to generate a respective configuration message for each shard processing device according to shard information corresponding to the shard processing device and a message topic configured by the shard processing device.

The transmission module 14 is configured to transmit N configuration messages respectively generated for the N shard processing devices to the relay cluster, wherein each shard processing device obtains respective configuration message from the relay cluster, and processes respective shard information based on the obtained configuration message.

In all embodiments, the first client is in a secure environment, and a manner in which the first obtaining module 11 obtains the N pieces of shard information of the client key includes:
obtaining the client key in the secure environment;
generating an M-1 degree polynomial in the secure environment based on the client key, where M is a positive integer less than N; and
obtaining the N pieces of shard information in the secure environment based on the M-1 degree polynomial.

In all embodiments, a manner in which the first obtaining module 11 obtains the N pieces of shard information in the secure environment based on the M-1 degree polynomial includes:
generating a curve in the secure environment based on the M-1 degree polynomial; and
obtaining coordinate information of N points on the curve, and using the coordinate information of the N points as the N pieces of shard information, where the client key is generated by using M pieces of shard information among the N pieces of shard information.

In all embodiments, the second client has a service resource; and the apparatus 1 is further configured to:
obtain resource transfer service data for the service resource, where the resource transfer service data is configured for instructing to perform transfer processing on the service resource;
set, for the resource transfer service data, a message topic that is configured at the relay cluster by the shard processing device to which the second client belongs, to obtain a target configuration message; and
transmit the target configuration message to the relay cluster, where the second client obtains the target configuration message from the relay cluster and signs the resource transfer service data in the target configuration message.

In all embodiments, the resource transfer service data belongs to service data in a blockchain network, and the service resource is in the blockchain network; and the apparatus 1 is further configured to:
obtain, from the relay cluster, a signature configuration message returned by the second client, where the signature configuration message is obtained after setting by the second client, for the signed resource transfer service data, a message topic configured by the first client at the relay cluster, and is transmitted to the relay cluster; and
transmit the signed resource transfer service data in the signature configuration message to the blockchain network, where the blockchain network performs consensus processing on the signed resource transfer service data, and after successful consensus on the signed resource transfer service data, performs transfer processing on the service resource as instructed by the resource transfer service data.

In all embodiments, the client key is generated by using M pieces of shard information among the N pieces of shard information, M being a positive integer less than N, and a process of signing, by the second client, the resource transfer service data in the target configuration message includes:
obtaining, by the second client, M-1 pieces of shard information from M-1 shard processing devices, where the M-1 shard processing devices are randomly selected from the N shard processing devices corresponding to the N pieces of shard information, except for the shard processing device to which the second client belongs;
generating, by the second client, the client key based on shard information corresponding to the shard processing device to which the second client belongs and the M-1 pieces of shard information obtained from the M-1 shard processing devices; and
signing, by the second client, the resource transfer service data in the target configuration message based on the generated client key.

In all embodiments, a communication key is shared between the first client and each shard processing device, and for any one of the N shard processing devices (which is called a target shard processing device),
a manner in which the generation module 13 generates the respective configuration message for each shard processing device according to the shard information corresponding to the shard processing device and the message topics configured by the shard processing device includes:
setting, for the shard information corresponding to the target shard processing device, the message topic configured by the target shard processing device, to generate an initial configuration message of the target shard processing device; and
encrypting the initial configuration message of the target shard processing device by using the communication key shared between the first client and the target shard processing device, to obtain the configuration message of the target shard processing device.

In all embodiments, a communication key is shared between the first client and each shard processing device, the communication key shared between the first client and the target shard processing device is a symmetric key, and the relay cluster includes a plurality of relay devices; for any one of the N shard processing devices (which is called a target shard processing device),
after the first client transmits the generated N configuration messages to the relay cluster, a method performed by the target shard processing device includes:
obtaining, by the target shard processing device, the configuration message of the target shard processing device from any one of the plurality of relay devices in the relay cluster; and
decrypting, by the target shard processing device, the obtained configuration message by using the communication key shared between the first client and the target shard processing device, to obtain the shard information corresponding to the target shard processing device.

In all embodiments, the relay cluster includes a plurality of relay devices; and a manner in which the transmission module 14 transmits the N configuration messages to the relay cluster includes:
transmitting the N configuration messages to any one of the plurality of relay devices in the relay cluster, where the relay device broadcasts the received N configuration messages to other relay devices in the relay cluster.

In all embodiments, the relay cluster has a message topic configured by the first client;
the first client and each shard processing device is connected communicatively based on the message topic configured by the first client at the relay cluster and the message topic configured by the shard processing device at the relay cluster; and
the relay cluster includes the plurality of relay devices, and the open-source relay service operation performed by the relay cluster includes a decentralized service operation performed by one or more relay devices in the relay cluster.

In all embodiments, the relay cluster has a message topic configured by the first client; and the apparatus 1 is further configured to:
transmit a persistent connection establishment request to the relay cluster, and establish a persistent connection between the relay cluster and the first client based on the persistent connection establishment request;
receive new message prompt information that is transmitted by the relay cluster based on the persistent connection between the relay cluster and the first client, where the new message prompt information is transmitted to the first client by the relay cluster when obtaining a new message related to the message topic configured by the first client; and
pull, from the relay cluster based on the new message prompt information, the new message related to the message topic configured by the first client.

According to all embodiments of this application, the operations in the message processing method shown in FIG. 3 may be performed by the modules in the message processing apparatus 1 shown in FIG. 10. For example, operation S101 shown in FIG. 3 may be performed by the first obtaining module 11 in FIG. 10, operation S102 shown in FIG. 3 may be performed by the second obtaining module 12 in FIG. 10, operation S103 shown in FIG. 3 may be performed by the generation module 13 in FIG. 10, and operation S104 shown in FIG. 3 may be performed by the transmission module 14 in FIG. 10.

In all embodiments, a first client may obtain N pieces of shard information of a client key of a second client, where the N pieces of shard information are configured to generate the client key of the second client; each piece of shard information is processed by one corresponding shard processing device; and the second client is disposed on any shard processing device. Since each piece of shard information is processed by one corresponding shard processing device, distributed processing can be implemented on the client key of the second client at a plurality of shard processing devices, thereby improving the security of the client key. In addition, the first client may further obtain a message topic configured by each shard processing device at a relay cluster, where a relay connection is configured between the first client and each shard processing device. Accordingly, the first client can implement communication and interaction with each shard processing device by using the relay connection between the first client and each shard processing device. In addition, the relay cluster is configured to perform an open-source relay service operation between the first client and any shard processing device having the relay connection with the first client. Therefore, the first client can securely distribute each piece of shard information to each shard processing device based on the open-source relay service operation performed by the relay cluster, thereby ensuring the security of distributing the shard information. In addition, the first client may generate a configuration message of each shard processing device according to the shard information corresponding to each shard processing device and the message topic configured by each shard processing device; and transmit the generated N configuration messages to the relay cluster, to enable each shard processing device to obtain the respective configuration message from the relay cluster and process the corresponding shard information based on the respective configuration message. The first client generates the configuration message of each shard processing device based on the message topic configured by each shard processing device at the relay cluster, and distributes the configuration message of each shard processing device to each shard processing device by using a relay function of the relay cluster. This enables communication and interaction between the first client and each shard processing device, and enables distribution of the N pieces of shard information, so that distributed processing can be performed on the client key of the second client in the N shard processing devices.

According to all embodiments of this application, the modules in the message processing apparatus 1 shown in FIG. 10 may be separately or entirely combined into one or several units, or one (or more) of the units herein may further be divided into a plurality of functionally smaller subunits, which can implement the same operations without affecting implementation of the technical effects of the embodiments of this application. The foregoing modules are divided based on logical functions. In practical application, a function of one module may be implemented by a plurality of units, or functions of a plurality of modules are implemented by one unit. In all embodiments of this application, the message processing apparatus 1 may also include another unit. In practical application, these functions may also be cooperatively implemented by another unit and may be cooperatively implemented by a plurality of units.

According to all embodiments of this application, a computer program (including program code) that can perform the operations in the corresponding method shown in FIG. 3 may be run on a general computer device, such as a computer, that includes processing elements and storage elements such as a central processing unit (CPU), a random access memory (RAM), and a read-only memory (ROM), to construct the message processing apparatus 1 shown in FIG. 10, and to implement the message processing method according to the embodiments of this application. The computer program may be recorded in, for example, a computer-readable recording medium, and may be loaded into the foregoing computer device by using the computer-readable recording medium, and run in the computer device.

FIG. 11 is a schematic structural diagram of a computer device according to embodiments of this application. As shown in FIG. 11, the computer device 1000 may include: a processor 1001, a network interface 1004, and a memory 1005. In addition, in all embodiments, the computer device 1000 may further include: a user interface 1003 and at least one communication bus 1002. The communication bus 1002 is configured to implement connection and communication between the components. The user interface 1003 may include a display and a keyboard, and in all embodiments, the user interface 1003 may further include a standard wired interface and a standard wireless interface. In all embodiments, the network interface 1004 may include a standard wired interface and a standard wireless interface (for example, a WI-FI interface). The memory 1005 may be a high-speed RAM memory, or may be a non-volatile memory, for example, at least one magnetic disk memory. In all embodiments, the memory 1005 may further be at least one storage apparatus away from the processor 1001. As shown in FIG. 11, the memory 1005, which is used as a computer storage medium, may include an operating system, a network communication module, a user interface module, and a device control application program.

In the computer device 1000 shown in FIG. 11, the network interface 1004 may provide a network communication function. The user interface 1003 is mainly configured to provide an input interface for a user. The processor 1001 may be configured to invoke the device control application program stored in the memory 1005, to implement:
obtaining N pieces of shard information of a client key of a second client, N being a positive integer, the N pieces of shard information being configured to generate the client key, each of the N pieces of shard information being processed by a corresponding one of N shard processing devices, the second client being disposed on any one of the N shard processing devices;
obtaining a respective message topic configured by each shard processing device at a relay cluster, the first client and each shard processing device being connected communicatively via the relay cluster, the relay cluster being configured to perform an open-source relay service operation between the first client and each shard processing device;
generating a respective configuration message for each shard processing device according to shard information corresponding to the shard processing device and a message topic configured by the shard processing device; and
transmitting N configuration messages respectively generated for the N shard processing devices to the relay cluster, wherein each shard processing device obtains respective configuration message from the relay cluster, and processes respective shard information based on the obtained configuration message.

The computer device 1000 described in the embodiments of this application may perform the descriptions of the foregoing message processing method in the foregoing embodiments corresponding to FIG. 3, or may perform the descriptions of the foregoing message processing apparatus 1 in the foregoing embodiments corresponding to FIG. 10. Details are not described herein again. In addition, the description of beneficial effects of the same method is not repeated herein again.

In addition, all embodiments of this application further provide a computer-readable storage medium. The computer-readable storage medium has a computer program executed by the foregoing message processing apparatus 1 stored therein. When a processor executes the computer program, the operations in the message processing method in the foregoing embodiments corresponding to FIG. 3 can be performed. Therefore, details are not described herein again. In addition, the description of beneficial effects of the same method is not repeated herein again. For technical details that are not disclosed in the embodiments of the computer storage medium involved in all embodiments, refer to the description of the method embodiments of this application.

As an example, the foregoing computer program may be deployed on one computer device for execution, or may be deployed on a plurality of computer devices located at one site for execution, or may be executed on a plurality of computer devices that are distributed on a plurality of sites and that are interconnected through a communication network. The plurality of computer devices that are distributed on a plurality of sites and that are interconnected through a communication network may form a blockchain network.

The computer-readable storage medium may be an internal storage unit of the message processing apparatus provided in any one of the foregoing embodiments or the foregoing computer device, for example, a hard disk or memory of the computer device. The computer-readable storage medium may alternatively be an external storage device of the computer device, for example, a removable hard disk, a smart media card (SMC), a secure digital (SD) card, or a flash card equipped on the computer device. Further, the computer-readable storage medium may further include both an internal storage unit and an external storage device of the computer device. The computer-readable storage medium is configured to store the computer program and another program and data that are required by the computer device. The computer-readable storage medium may further be configured to temporarily store data that has been outputted or data to be outputted.

All embodiments of this application provide a computer program product. The computer program product includes a computer program, and the computer program is stored in a computer-readable storage medium. A processor of a computer device reads the computer program from the computer-readable storage medium, and the processor executes the computer program, to cause the computer device to perform the descriptions of the foregoing message processing method in the foregoing embodiments corresponding to FIG. 3. Therefore, details are not described herein again. In addition, the description of beneficial effects of the same method is not repeated herein again. For technical details that are not disclosed in the embodiments of the computer-readable storage medium of this application, refer to the method embodiments of this application.

In the specification, claims, and accompanying drawings of embodiments of this application, the terms "first" and "second" are intended to distinguish between different objects but do not indicate a particular order. In addition, terminologies "include" and any variations thereof are intended to indicate non-exclusive inclusion. For example, a process, a method, an apparatus, a product, or a device that includes a series of steps or modules is not limited to the listed steps or units; and instead, further includes a step or module that is not listed, or further includes another step or unit that is intrinsic to the process, the method, the apparatus, the product, or the device.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are executed in a mode of hardware or software depends on particular applications and design constraint conditions of the technical solutions. A person skilled in the art may use different methods to implement the described functions for each particular application, but it is not to be considered that the implementation goes beyond the scope of this application.

The method and the related apparatus provided in the embodiments of this application are described with reference to method flowcharts and/or schematic structural diagrams provided in the embodiments of this application. Specifically, computer program instructions may be used to implement each process and/or each block in the method flowcharts and/or the schematic structural diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the schematic structural diagrams. These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the schematic structural diagrams. These computer program instructions may alternatively be loaded onto a computer or another programmable data processing device, so that a series of operations and steps are performed on the computer or another programmable device, to generate computer-implemented processing. Therefore, the instructions executed on the computer or another programmable device provide operations for implementing a specific function in one or more processes in the flowcharts and/or in one or more blocks in the schematic structural diagrams.

What is disclosed above is merely some embodiments of this application, and is not intended to limit the protection scope of this application. Therefore, equivalent variations made in accordance with the claims of this application shall fall within the scope of this application.

## Claims

1. A message processing method, executable by a first client, the method comprising:
obtaining N pieces of shard information of a client key of a second client, N being a positive integer, the N pieces of shard information being configured to generate the client key, each of the N pieces of shard information being processed by a corresponding one of N shard processing devices, the second client being disposed on any one of the N shard processing devices;
obtaining a respective message topic configured by each shard processing device at a relay cluster, the first client and each shard processing device being connected communicatively via the relay cluster, the relay cluster being configured to perform an open-source relay service operation between the first client and each shard processing device;
generating a respective configuration message for each shard processing device according to shard information corresponding to the shard processing device and a message topic configured by the shard processing device; and
transmitting N configuration messages respectively generated for the N shard processing devices to the relay cluster, wherein each shard processing device obtains respective configuration message from the relay cluster, and processes respective shard information based on the obtained configuration message.

2. The method according to claim 1, wherein the first client is in a secure environment, and the obtaining N pieces of shard information of the client key comprises:
obtaining the client key in the secure environment;
generating an M-1 degree polynomial in the secure environment based on the client key, wherein M is a positive integer less than N; and
obtaining the N pieces of shard information in the secure environment based on the M-1 degree polynomial.

3. The method according to claim 2, wherein the obtaining the N pieces of shard information in the secure environment based on the M-1 degree polynomial comprises:
generating a curve in the secure environment based on the M-1 degree polynomial; and
obtaining coordinate information of N points on the curve, and using the coordinate information of the N points as the N pieces of shard information, wherein
the client key is generated by using M pieces of shard information among the N pieces of shard information.

4. The method according to any one of claims 1 to 3, wherein the second client has a service resource, and the method further comprises:
obtaining resource transfer service data for the service resource of the second client, wherein the resource transfer service data is configured for instructing to perform transfer processing on the service resource;
setting, for the resource transfer service data, a message topic that is configured at the relay cluster by the shard processing device to which the second client belongs, to obtain a target configuration message; and
transmitting the target configuration message to the relay cluster, wherein the second client obtains the target configuration message from the relay cluster and signs the resource transfer service data in the target configuration message.

5. The method according to claim 4, wherein the resource transfer service data belongs to service data in a blockchain network, the service resource is in the blockchain network, and the method further comprises:
obtaining, from the relay cluster, a signature configuration message returned by the second client, wherein the signature configuration message is obtained after setting by the second client, for the signed resource transfer service data, a message topic configured by the first client at the relay cluster, and is transmitted to the relay cluster; and
transmitting the signed resource transfer service data in the signature configuration message to the blockchain network, wherein the blockchain network performs consensus processing on the signed resource transfer service data, and after successful consensus, performs transfer processing on the service resource as instructed by the resource transfer service data.

6. The method according to claim 4 or 5, wherein the client key is generated by using the M pieces of shard information among the N pieces of shard information, M being a positive integer less than N; and a process of signing, by the second client, the resource transfer service data in the target configuration message comprises:
obtaining, by the second client, M-1 pieces of shard information from M-1 shard processing devices, wherein the M-1 shard processing devices are randomly selected from the N shard processing devices corresponding to the N pieces of shard information, except for the shard processing device to which the second client belongs;
generating, by the second client, the client key based on shard information corresponding to the shard processing device to which the second client belongs and the M-1 pieces of shard information obtained from the M-1 shard processing devices; and
signing, by the second client, the resource transfer service data in the target configuration message based on the generated client key.

7. The method according to any one of claims 1 to 6, wherein a communication key is shared between the first client and each shard processing device, and for any one of the N shard processing devices,
the generating a respective configuration message for each shard processing device according to shard information corresponding to the shard processing device and a message topic configured by the shard processing device comprises:
setting, for the shard information corresponding to the shard processing device, the message topic configured by the shard processing device, to generate an initial configuration message of the shard processing device; and
encrypting the initial configuration message of the shard processing device by using the communication key shared between the first client and the shard processing device, to obtain the configuration message of the shard processing device.

8. The method according to any one of claims 1 to 7, wherein a communication key is shared between the first client and each shard processing device, the communication key shared between the first client and the shard processing device is a symmetric key, and the relay cluster includes a plurality of relay devices; for any one of the N shard processing devices,
after the first client transmits the N configuration messages to the relay cluster, the method further comprises:
obtaining, by the shard processing device, the configuration message of the shard processing device from any one of the plurality of relay devices in the relay cluster; and
decrypting, by the shard processing device, the obtained configuration message by using the communication key shared between the first client and the shard processing device, to obtain the shard information corresponding to the shard processing device.

9. The method according to any one of claims 1 to 8, wherein the relay cluster includes a plurality of relay devices; and
the transmitting the N configuration messages to the relay cluster comprises:
transmitting the N configuration messages to any one of the plurality of relay devices in the relay cluster, wherein the relay device broadcasts the received N configuration messages to other relay devices in the relay cluster.

10. The method according to any one of claims 1 to 9, wherein the relay cluster has a message topic configured by the first client;
the first client and each shard processing device being connected communicatively based on the message topic configured by the first client at the relay cluster and the message topic configured by the shard processing device at the relay cluster; and
the relay cluster includes a plurality of relay devices, and the relay service operation performed by the relay cluster includes a decentralized service operation performed by one or more relay devices in the relay cluster.

11. The method according to any one of claims 1 to 10, wherein the relay cluster has a message topic configured by the first client, and the method further comprises:
transmitting a persistent connection establishment request to the relay cluster, and establishing a persistent connection between the relay cluster and the first client based on the persistent connection establishment request;
receiving new message prompt information that is transmitted by the relay cluster based on the persistent connection, wherein the new message prompt information is transmitted to the first client by the relay cluster when obtaining a new message related to the message topic configured by the first client; and
pulling, from the relay cluster based on the new message prompt information, the new message related to the message topic configured by the first client.

12. A message processing apparatus, applicable to a first client, the apparatus comprising:
a first obtaining module, configured to obtain N pieces of shard information of a client key of a second client, N being a positive integer, the N pieces of shard information being configured to generate the client key, each of the N pieces of shard information being processed by a corresponding one of N shard processing devices, the second client being disposed on any one of the N shard processing devices;
a second obtaining module, configured to obtain a respective message topic configured by each shard processing device at a relay cluster, the first client and each shard processing device being connected communicatively via the relay cluster, the relay cluster being configured to perform an open-source relay service operation between the first client and each shard processing device;
a generation module, configured to generate a respective configuration message for each shard processing device according to shard information corresponding to the shard processing device and a message topic configured by the shard processing device; and
a transmission module, configured to transmit N configuration messages respectively generated for the N shard processing devices to the relay cluster, wherein each shard processing device obtains respective configuration message from the relay cluster, and processes respective shard information based on the obtained configuration message.

13. A computer program product, comprising a computer program, the computer program being stored in a computer-readable storage medium, and a processor of a computer device reading and executing the computer program from the computer-readable storage medium, to cause the computer device to perform the method according to any one of claims 1 to 11.

14. A computer device, comprising a memory and a processor, the memory having a computer program stored therein, and the computer program, when executed by the processor, causing the processor to perform the method according to any one of claims 1 to 11.

15. A computer-readable storage medium, having a computer program stored therein, the computer program being adapted to be loaded by a processor to perform the method according to any one of claims 1 to 11.
